# EUROPÄISCHE PATENTANMELDUNG

(11) **EP 4 803 822 A1**
(43) Veröffentlichungstag der Anmeldung: **09.09.2026**
(21) Anmeldenummer: 26162897.8
(22) Anmeldetag: 06.03.2026
(51) Int. Cl.: F24H 1/12, C25B 1/04, F24H 15/242, F24H 15/25, F24H 15/36, F24H 15/421

(54) **WASSERSTOFFBETRIEBENE VORRICHTUNG ZUR WÄRMEERZEUGUNG SOWIE ENTSPRECHENDES VERFAHREN**

(30) Priorität: 07.03.2025 DE 102025108650
(71) Anmelder: Symbionik GmbH, 30625 Hannover (DE)
(72) Erfinder: ÖZÜMAZLUM, Ibrahim, 30625 Hannover (DE)
(74) Vertreter: Horak, Michael

(57) **Zusammenfassung**

Die vorliegende Erfindung betrifft eine Vorrichtung zur Wärmeerzeugung sowie ein dazugehöriges Verfahren und ein Computerprogramm, wobei durch eine Einlassöffnung ein Wasserstoff (H₂)-Gasgemisch in mindestens einen Reaktionsraum geleitet wird, wobei der Reaktionsraum in Verbindung mit einem Impulszünder steht, welcher eine Initialzündung des Gasgemisches im Reaktionsraumes erzeugt, der dabei entstehende Wasserdampf wird über mindestens eine Auslassöffnung aus dem Reaktionsraum in ein Dampfrohr geführt, in dem der Wasserdampf kondensiert, wobei das Dampfrohr derart ausgebildet ist, dass es eine Kurve bildet und parallel zum Reaktionsraum zurückgeführt wird, wodurch das darin gebildete Wasser zur Aufrechterhaltung der Reaktion im Reaktionsraum und/oder zur Wiederverwendung in einem Elektrolyseprozess verwendet werden kann.

## Beschreibung

### Kurzdarstellung der Erfindung

Die vorliegende Erfindung betrifft eine wasserstoffbetriebene Vorrichtung zur Wärmeerzeugung sowie ein entsprechendes Verfahren.

Generatoren zur Wärmeerzeugung für beispielsweise die Beheizung von Gebäuden und/oder die Bereitstellung von warmem Wasser sind in vielfältiger Form bekannt. Bislang wird Wärme üblicherweise mithilfe fossiler Brennstoffe, wie beispielsweise Öl oder Gas, hergestellt. Hierbei werden die fossilen Brennstoffe zusammen mit Verbrennungsluft einer thermischen Reaktion (Verbrennen) unterzogen, wobei Prozesswärme frei wird, die sodann beispielsweise durch einen Wärmetauscher an ein zumeist flüssiges Medium übertragen werden kann, um dieses zu erwärmen. Die Verbrennungsprodukte werden hierbei in der Regel über ein Abgasrohr des und einer nachgeordneten Abgasanlage ins Freie abgeführt. Darüber hinaus werden immer häufiger elektrisch betriebene Vorrichtungen zur Wärmeerzeugung verwendet, wie beispielsweise Wärmepumpen, Durchlauferhitzer oder Ähnliche.

In jüngster Zeit werden auch immer große Anstrengen unternommen neue Vorrichtungen zur Wärmeerzeugung zur Verfügung zu stellen, die für den Betrieb mit Wasserstoff als Brenngas oder als Beimischung zu Brenngasen geeignet sind. Hierbei sind insbesondere auch Vorrichtungen gefragt, die für die Beheizung von Gebäuden und/oder die Bereitstellung von warmem Wasser in privaten Haushalten, Geschäften und Ähnlichen geeignet sind und folglich einen kompakten Aufbau aufweisen. Derzeit gibt es Heizgeräte, die eine Kombination aus Gas und Wasserstoff verwenden. Der hierfür notwendige Wasserstoff wird in Druckbehältern mit hohen Sicherheitsstandards zwischengelagert oder kann mit entsprechenden Rohrleitungen (falls vorhanden) an den Endverbraucher abgegeben werden.

Die DE 10 2022 116 119 B3 beschreibt beispielsweise ein Elektrolyseverfahren von Wasserstoff und Sauerstoff, wobei die entstehenden Gase in einen flüssigkeitsfreien Brennraum geführt werden und dort gezündet werden, wobei die herbei erzeugte Wärme an einen Wärmetauscher abgegeben werden kann.

Auch die in der WO 2023/ 078 949 A1 ist eine Vorrichtung beschrieben, die dazu eingerichtet ist, ein wasserstoffhaltiges Brenngas zu verbrennen.

Der Nachteil der bekannten Vorrichtungen ist, dass diese aufgrund der aus der Elektrolyse stammenden Gase und der Verbrennung des Wasserstoffes hohe Sicherheitsstandards erfüllen müssen, um die Reaktionen kontrollierbar zu machen. Darüber hinaus werden aufgrund der teilweise verwendeten Gasgemische weiterhin Emissionen freigesetzt. Ein weiterer Nachteil der bekannten Systeme ist, dass diese in der Regel atmosphärische Luft benötigen, damit der Wasserstoff exotherm verbrannt werden kann.

Die Aufgabe der vorliegenden Erfindung ist daher wasserstoffbetriebene Vorrichtung zu Wärmeerzeugung und/oder Warmwassererzeugung zur Verfügung zu stellen, welche eine sichere und emissionsfreie Verwendung von Wasserstoff ermöglicht. Darüber hinaus sollen Speicher für Wasserstoff und/oder entsprechende Zufuhrleitungen sowie atmosphärische Luft obsolet werden.

Die vorliegende Erfindung betrifft daher eine Vorrichtung zur Wärmeerzeugung umfassend eine Einlassöffnung durch welche ein Wasserstoff (H₂)-Gasgemisch in mindestens einen Reaktionsraum geleitet wird, wobei der Reaktionsraum in Verbindung mit einem Impulszünder steht, welcher eine Initialzündung des Gasgemisches im Reaktionsraumes erzeugt, der dabei entstehende Wasserdampf wird über mindestens eine Auslassöffnung aus dem Reaktionsraum in ein Dampfrohr geführt, in dem der Wasserdampf kondensiert, wobei das Dampfrohr derart ausgebildet ist, dass es eine Kurve bildet und parallel zum Reaktionsraum zurückgeführt wird, wodurch das darin gebildete Wasser zur Aufrechterhaltung der Reaktion im Reaktionsraum und/oder zur Wiederverwendung in einem Elektrolyseprozess verwendet werden kann, darüber hinaus ist mindestens ein Temperatursensor im Reaktionsraum angeordnet, der die Temperatur innerhalb der Reaktionsraumes messen kann.

Die mindestens eine Einlassöffnung ist hierbei vorzugsweise als ein Düsensystem ausgebildet ist, welches eine kontrollierte Einspeisung des Wasserstoff (H₂)-Gasgemisch ermöglicht. In einer bevorzugten Ausführung handelt es sich bei dem Wasserstoff (H₂)-Gasgemisch um Sauerstoff (O₂) und Wasserstoff (H₂). Bei dem Düsensystem handelt es sich in einem Aspekt um eine Düse, die eine Präzisionsöffnung umfasst, welche einen Durchmesser von 1 mm bis 5 mm, besonders bevorzugt von 2 mm aufweist.

Innerhalb des Dampfrohrs, dem Dampfrohr nachgeschaltet, oder dem Dampfrohr vorgeschaltet ist in einer Ausführungsform eine Kühlung, an welcher die in der thermischen Reaktion entstehenden Gase abkühlen können. In einem bevorzugten Aspekt umfasst die Kühlung eine Kupferspirale.

In einem weiteren Aspekt der Erfindung wird das im Dampfrohr hergestellte Kondensat über eine Austrittsöffnung aus der Vorrichtung hinausgeleitet. Die Austrittsöffnung weist hierbei vorzugsweise mindestens ein Ventil zur Druckregulierung auf.

Der mindestens eine Temperatursensor der Vorrichtung umfasst in einer Ausführungsform ein Thermoelement und/oder ein Thermometer. In einer bevorzugten Ausführung handelt es sich um ein Einschraubthermoelement für einen Messbereich bis 1850 °C.

Die Komponenten der Vorrichtung, wie beispielsweise der Reaktionsraum, das Dampfrohr, das Düsensystem und ähnliche Komponenten sind in einem Aspekt der Erfindung aus einem Edelstahl, vorzugsweise einem V2A-Edelstahl, besonders bevorzugt aus einem V4A-Edelstahl ausgebildet.

In einer Ausführungsform weist die Einlassöffnung ein Verbindungselement zur Zuleitung des Gasgemisches auf, welches an mindestens einen Adapter angrenzend angeordnet ist, der der Anpassung zwischen den verschiedenen Komponenten dient. In einer bevorzugten Ausführungsform wird das Gasgemisch über eine Leitung geleitet, die über ein Verbindungselement, bei dem es sich vorzugsweise um einen Doppelnippel handelt, mit der Vorrichtung zur Wärmeerzeugung gekoppelt ist.

In einem weiteren Aspekt der Erfindung weist die Vorrichtung mindestens ein Distanzrohr zwischen dem Reaktionsraum und dem zurückgeführten Dampfrohr auf, dass zur mechanischen Stabilität der Vorrichtung des Reaktionsraumes beiträgt.

Die Vorrichtung kann ferner ein oder mehrere Ventile umfassen, die den Druck innerhalb des Reaktionsraumes und/oder des Dampfrohrs regeln, wobei es sich vorzugsweise um mindestens ein Edelstahl-Magnetventil zur Druckregelung handelt.

In einer Ausführungsform umfasst die Vorrichtung ferner mindestens eine Steuereinheit.

In einem Aspekt der Erfindung kann die Vorrichtung ferner mindestens einen Elektrolyseur zur Herstellung des Wasserstoff-Gasgemisches umfassen. Dieser kann der Vorrichtung auch vorgeschaltet sein.

Die Erfindung betrifft auch ein Verfahren zur Wärmeerzeugung mit einer zuvor beschriebenen Vorrichtung, umfassend die folgenden Schritte:
a) Einleitung eines H2/O2-Gemisches in einen Reaktionsraum bei einem Druck von 0,2 bar bis 0,8 bar;
b) Initiieren einer Redoxreaktion innerhalb des Reaktionsraumes durch einen elektronischen Impuls;
c) Ableiten des entstehenden Wasserdampfes aus dem Reaktionsraum in ein Dampfrohr (40), in dem dieses abgekühlt wird; und
d) Rückführung des entstehenden Wassers.

In einem Aspekt der Erfindung wird die Redoxreaktion innerhalb des Reaktionsraumes durch Zuführung von Wasser aufrechterhalten erhalten.

In einem Schritt des Verfahrens oder parallel zu den ablaufenden Schritten kann in einer Ausführungsform ferner die Temperatur im Reaktionsraum gemessen werden. Dies erfolgt besonders bevorzugt in einer kontinuierlichen Messung.

In einem bevorzugten Aspekt wird die Redoxreaktion innerhalb des Reaktionsraumes bei einem voreingestellten Druck und/oder einer voreingestellten Temperatur beendet, vorzugsweise indem kein weiterer H₂/O₂-Gasgemisch in diesen eingeführt wird. Eine Abschaltung erfolgt vorzugsweise bei einem Druck von 0,20 bar bis 0,40 bar, besonders bevorzugt bei einem Druck von 0,30 bar bis 0,35 bar.

In einer weiteren Ausführungsform der Erfindung kann in einem vorgeschalteten Schritt eine Herstellung eines H₂/O₂-Gemisches in einem Elektrolyseur erfolgen.

Ferner betrifft die Erfindung auch ein Computerprogramm zur Durchführung mindestens eines Schrittes des zuvor beschriebenen Verfahrens.

Die vorliegende Erfindung wird durch die Ausführungsformen in den Ansprüchen gekennzeichnet und durch die Ausführungen in der folgenden Beschreibung, den Beispielen und den Zeichnungen näher beschrieben.

### Beschreibung der Zeichnungen

- Fig. 1: Schematische Darstellung einer bevorzugten Ausführungsform der erfindungsgemäßen Vorrichtung zur Wärmeerzeugung (Ansicht von Unten).
- Fig. 2: Schematische Darstellung einer bevorzugten Ausführungsform der erfindungsgemäßen Vorrichtung zur Wärmeerzeugung (Draufsicht).
- Fig. 3: Schematische Darstellung einer bevorzugten Ausführungsform der erfindungsgemäßen Vorrichtung zur Wärmeerzeugung (Seitenansicht).
- Fig. 4: Schematische Darstellung einer bevorzugten Ausführungsform der erfindungsgemäßen Vorrichtung zur Wärmeerzeugung (Querschnitt).
- Fig. 5: Schematische Darstellung einer bevorzugten Ausführungsform der erfindungsgemäßen Vorrichtung zur Wärmeerzeugung (Längsschnitt).
- Fig. 6: Schematische Darstellung einer bevorzugten Ausführungsform der erfindungsgemäßen Vorrichtung zur Wärmeerzeugung (3D-Darstellung).
- Fig. 7: Schematische Darstellung einer bevorzugten Ausführungsform der erfindungsgemäßen Vorrichtung zur Wärmeerzeugung (3D-Darstellung; Perspektive).

### Detaillierte Beschreibung der Erfindung

Die vorliegende Erfindung betrifft wasserstoffbetriebene Vorrichtung zur Wärmeerzeugung sowie ein entsprechendes Verfahren.

Im Folgenden sollten die Artikel "ein" und alle Ableitungen hiervon, wie sie hier verwendet werden, generell als "ein/e/es oder mehrere" verstanden werden, sofern nicht anderweitig angegeben oder aus dem Kontext als Singularform ersichtlich ist.

Sofern die Begriffe "enthält", "hat", "besitzt" und dergleichen in der Beschreibung oder den Ansprüchen verwendet werden, sollen diese Begriffe derart verstanden werden, wie der Begriff "aufweisend" oder "umfassend", d.h. nicht abschließend, außer es ist explizit angegeben.

Im Folgenden werden die Begriffe "Gas" und "Gase" als reines Gas oder ein Gasgemisch verstanden. Das Gas oder Gasgemisch umfasst vorzugsweise keine Umgebungsluft. Darüber hinaus umfasst das Gas vorzugsweise eine geringere Dichte als die Umgebungsluft auf. In einem besonders bevorzugten Aspekt handelt es sich bei dem Gas um Wasserstoff und bei den Gasen, um Sauerstoff (O₂) und Wasserstoff (H₂). Folglich umfasst das Gasgemisch, vorzugsweise ein H₂/O₂-Gemisch, besonders bevorzugt ein getrocknetes H₂/O₂-Gemisch.

Die erfindungsgemäße Vorrichtung zur Wärmeerzeugung kann in einem Aspekt mindestens einen Elektrolyseur umfassen, in welchem eine Elektrolyse von Wasser und Sauerstoff zu Wasserstoff erfolgen kann.

Die Reaktionsgleichung lautet hierbei wie folgt:

2 H₂O 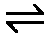

O₂ + 2 H₂

Alternativ oder zusätzlich kann vorgesehen sein, dass das im Folgenden verwendete Gas zur Erzeugung von Wärme, vorzugsweise Wasserstoff, durch externe Anbieter geliefert wird.

Die erfindungsgemäße Vorrichtung zur Wärmeerzeugung umfasst jedoch mindestens einen Reaktionsraum (10), in welchem eine elektrochemische Reaktion des Wasserstoffs stattfindet.

Bei dem Reaktionsraum (10) handelt es sich vorzugsweise um einen "Druckbehälter", der als ein Behälter verstanden werden soll, der druckdicht ausgebildet ist und in dem ferner ein Druck aufrechterhalten werden kann. Der Reaktionsraum (10) umfasst hierbei mindestens eine Einlassöffnung (15) aufweisen, über diese mindestens ein Gas oder ein anderes Medium in den Reaktionsraum (10) eingeführt werden kann. Bei dem Gas handelt es sich vorzugsweise um Wasserstoff und Sauerstoff. Die mindestens eine Einlassöffnung (15) ist hierbei vorzugsweise jeweils als ein Düsensystem ausgebildet, welches eine kontrollierte Einspeisung des Gasgemischs und Verhinderung von Rückschlägen ermöglicht. Um dies zu ermöglichen weist die Einlassöffnung (15) in einem Aspekt eine Düse (20) mit einer Präzisionsöffnung auf, die vorzugsweise einen Durchmesser von 0,5 mm bis 5 mm, besonders bevorzugt von 2 mm aufweist. Ferner handelt es sich beim Material der Düse (20) bevorzugt um ein Metall, insbesondere einen V2A-Edelstahl. Das im Elektrolyseur hergestellte Gas bzw. Gasgemisch oder gelieferte Gas wird hierbei über eine Leitung über ein Verbindungselement (90), bei dem es sich vorzugsweise um einen Doppelnippel handelt, mit der Vorrichtung zur Wärmeerzeugung gekoppelt. Das Verbindungselement (90) ist vorzugsweise aus einem V4A-Edelstahl ausgebildet. Angrenzend an das Verbindungselement (90) kann mindestens ein Adapter (100) vorgesehen sein, der der Anpassung zwischen den verschiedenen Komponenten dient. Um eine entsprechende Stabilität zu gewährleisten ist auch dieser Adapter (100) vorzugsweise aus einem V4A-Edelstahl ausgebildet. Dem Fachmann auf diesem Gebiet ist jedoch bekannt, dass auch andere Materialien Anwendung finden können, die ähnliche, gleiche oder bessere Eigenschaften aufweisen. Über den Adapter (100) und/oder das Verbindungselement (90) kann die Düse (20) in Kontakt mit der Gaszuleitung stehen. Das Gas bzw. Gasgemisch wird sodann über die Düse (20) in den Reaktionsraum (10) geleitet. In einer besonders bevorzugten Ausführungsform ist vorgesehen, dass mindestens zwei Input-Düsen (20) an dem Reaktionsraum (10) angeordnet sind, wobei jeweils eine an jeder Stirnseite des Reaktionsraumes (10) angeordnet ist. Die mindestens eine Düse (20), welche in Kombination mit der Einlassöffnung (15) steht, sorgt für eine kontrollierte Einleitung des Gasgemisches bei niedrigem Überdruck, vorzugsweise 0,1 bis 0,5 bar, besonders bevorzugt 0,2 bar, in den Reaktionsraum (10).

Der Reaktionsraum (10) ist vorzugsweise aus einem Metall gebildet, welches der thermischen Reaktion bei der Herstellung von Wasserstoff und der resultierenden freiwerdenden Energie standhält. In einer bevorzugten Ausführungsform wird für den Reaktionsraum (10) Edelstahl verwendet, insbesondere ein sogenannter V2A-Edelstahl, der zusätzlich Chrom, Nickel und Kohlenstoff, sowie weitere Elemente, wie beispielsweise Mangan, Phosphor und Schwefel in kleineren Mengen, umfasst. Als besonders geeignet hat sich der sogenannte V4A-Edelstahl herausgestellt, der eine zusätzliche Legierung mit Molybdän, Nickel und/oder Titan aufweist. Diese zusätzliche Legierung mit Molybdän, Nickel und/oder Titan kann auch lediglich im Innenraum des Reaktionsraumes (10) aufgebracht sein. Die Größe des Reaktionsraumes (10) ist abhängig von der Verwendung. In großen kommerziellen Anlagen ist der Reaktionsraum (10) deutlich größer als beispielsweise in Anlagen von privaten Haushalten. In einer besonders bevorzugten Ausführungsform, wie sie beispielsweise in Wärme- und/oder Warmwassererzeugern in privaten Haushalten verwendet werden kann, weist der Reaktionsraum (10) einen Außendurchmesser von 10 mm bis 50 mm, vorzugsweise von 18 mm bis 33 mm auf. Der Innendurchmesser des Reaktionsraumes (10) umfasst hierbei vorzugsweise eine Größe von 4 mm bis 20 mm, vorzugsweise von 6 mm bis 10 mm. Die Länge des Reaktionsraumes (10) beträgt in diesem Zusammenhang vorzugsweise 30 mm bis 220 mm, besonders bevorzugt 40 mm bis 160 mm.

Der Reaktionsraum (10) steht in Verbindung mit einem Impulszünder (120), vorzugsweise einem elektronischen Impulszünder, welcher eine Initialzündung des Gasgemisches im Reaktionsraumes (10) durch einen elektrischen Funken erzeugt. Durch die Initialzündung reagiert der Wasserstoff zusammen mit dem im Reaktionsraum (10) vorhandenen Sauerstoff in einer thermischen Reaktion, wobei Wasser gebildet wird. Der Impulszünder umfasst vorzugsweise Zündkerzen, besonders bevorzugt um Kathodenbögen, handelt die in einem bestimmten Abstand zueinander angeordnet sind. Der Elektrodenabstand der Kathodenbögen beträgt vorzugsweise 8 mm bis 12 mm, besonders bevorzugt 10 mm. Diese Impulszünder (120) ermöglichen eine hochenergetische Impulszündung, vorzugsweise mit 10-20 kV, besonders bevorzugt mit 15 kV und gewährleisten dadurch einen stabilen Funkensprung.

Die Reaktionsgleichung lautet hierbei wie folgt:

O₂ + 2 H₂ 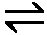

2 H₂O

Die bei der Redoxreaktion gebildete Wärmeenergie kann zur Erwärmung von Betriebswasser, wie beispielsweise Heizungen, oder Nutzwasser, wie beispielsweise Warmwasser verwendet werden. Hierfür kann die hiesige Vorrichtung Teil einer Heizungsanlage, einer Warmwasseranlage und/oder eines Kombinationsgerätes sein, die entsprechende Wasserleitungen und/oder Wasserspeicher umfassen.

Das Wasser bzw. der Wasserdampf wird über mindestens eine Auslassöffnung (25) aus dem Reaktionsraum (10) geleitet. Über die mindestens eine Auslassöffnung (25) kann ferner auch mindestens ein weiteres Gas und/oder Medium hinausgeleitet werden. In einem bevorzugten Aspekt der Erfindung, insbesondere wenn jeweils eine Düse (20) an jeder Stirnseite des Reaktionsraumes (10) angeordnet, ist der Wasserdampf-Ausgang, d.h. die Auslassöffnung (25), bevorzugt mittig an der Unterseite des Reaktionsraumes (10) angeordnet.

in einer Ausführungsform der vorliegenden Erfindung ist innerhalb des Reaktionsraumes (10) Inlay-Rohr, auch Innenrohr genannt, angeordnet, welches vorzugsweise koaxial innerhalb des Reaktionsraumes (10) angeordnet ist. Das Inlay-Rohr dient hauptsächlich als Wärmeausdehnungs-/Wärmespeicherrohr. Insbesondere kann das Inlay-Rohr verwendet werden, um thermische Resonanzen zu fördern. Das Inlay-Rohr ist vorzugsweise aus einem V2A-Edelstahl ausgebildet. In einer besonders bevorzugten Ausführung ist vorgesehen, dass das Inlay-Rohr zur Wärmespeicherung einen kleineren Durchmesser aufweist als der Reaktionsraum (10), vorzugsweise 1 % bis 40 % kleiner als der Reaktionsraum. Die Länge des Inlay-Rohr ist abhängig von der Länge des Reaktionsraumes und beträgt vorzugsweise 30 mm bis 220 mm, besonders bevorzugt 40 mm bis 160 mm. Die Wandstärke des Inlay-Rohres beträgt zwischen 2 mm und 5 mm, besonders bevorzugt 3 mm. Das Inlay-Rohr kann ferner in einem Aspekt der Erfindung durch katalytische Verbrennung von platinierten Sand die Effizienz der Vorrichtung bei der Wärmeerzeugung weiter erhöht. Hierfür kann optional vorgesehen sein, dass das Inlay-Rohr mit einem thermisch leitfähigen Material, wie beispielsweise Sand, vorzugsweise Siliziumsand oder Siliziumstein, gefüllt ist. Dieses leitfähige Material dient der Wärmespeicherung und Förderung einer resonanten Schwingung. Das leitfähige Material, wie beispielsweise der Silizium-Sand, kann in einer Ausführungsform platiniert sein. Durch das Platinieren kann eine sog. "Katalytische Verbrennungs"-Option gefördert werden, die den Verbrennungsprozess zusätzlich unterstützt. In einem solchen Fall, weist das Inlay-Rohr zusätzlich mindestens eine Bohrung auf, die einen Gaseintritt ermöglicht. In einem weiteren bevorzugten Aspekt weist das Inlay-Rohr einen konischen Reflektor (Kegel) an seinem distalen Ende auf. Die Spitze dieses Reflektors ist hierbei vorzugsweise in Richtung der Düse (20) gerichtet, um die Flamme gezielt in den gesamten Reaktionsraum (10) zu umzulenken.

In einem weiteren Aspekt kann durch die Sandpressung bzw. den Druck im Zwischenraum der beiden Rohre, d.h. des Reaktionsraumes (10) und des Inlay-rohres (Innenrohres), piezoelektrisch Spannung erzeugt werden, die für den Prozess der Wärmeerzeugung in der hiesigen Vorrichtung genutzt werden kann.

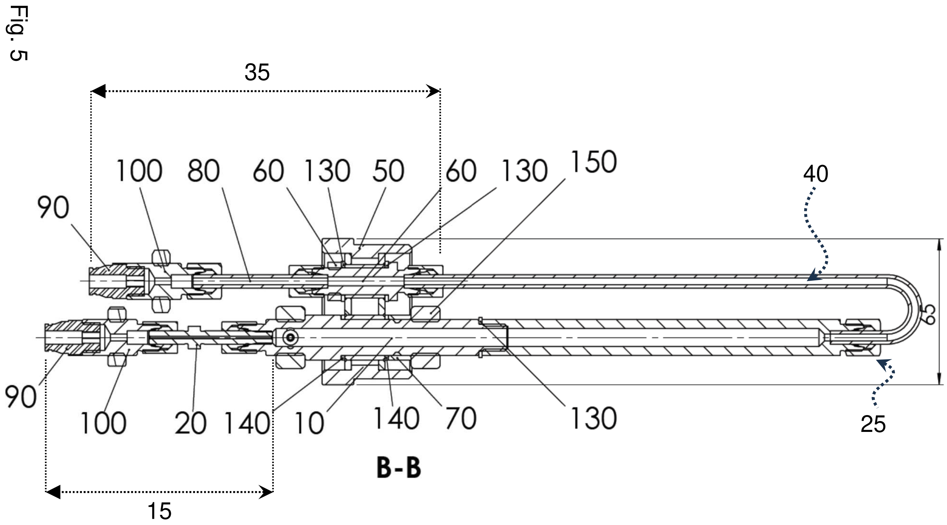

In einem Aspekt der Erfindung steht der Reaktionsraum (10) über die Auslassöffnung (25) in Verbindung mit dem Dampfrohr (40). Das Dampfrohr (40) ist vorzugsweise aus einem V2A-Edelstahl oder ähnlichem Material ausgebildet und dient der Leitung des Wasserdampfs und/oder kondensierten Wassers zur Wiederverwendung im Elektrolyseprozess. Das Wasser oder ein Teil des Wassers kann auch dem Reaktionsraum (10) zur Kühlung und Aufrechterhaltung der Wasserstoffreaktion zugeführt werden. Dies kann beispielsweise in Form von geeigneten Leitungen und Einlassöffnungen im Reaktionsraum (10) erfolgen. Zur Kühlung und/oder Aufrechterhaltung der Reaktion innerhalb des Reaktionsraumes (10) kann auch vorgesehen sein, dass externes Wasser beispielsweise in Form von Wasserdampf, zugeführt wird. Innerhalb des Dampfrohrs (25), dem Dampfrohr (25) nachgeschaltet, oder dem Dampfrohr (25) vorgeschaltet kann in einem Aspekt eine Kühlung vorgesehen sein, an welcher die in der thermischen Reaktion entstehenden Gase abgekühlt werden. Bei der Kühlung kann es sich grundsätzlich um jede bekannte Kühlung handeln, die der Kondensation von Gasen und Dämpfen dient. Um eine möglichst kompakte und effiziente Kühlung zu erhalten, hat sich in der hiesigen Vorrichtung insbesondere die Verwendung einer Kupferspirale zur Abkühlung der 300°C bis 400°C heißen Gase und Kondensation von Wasser herausgestellt. Das Dampfrohr (25) ist vorzugsweise ferner derart ausgebildet, dass es eine Kurve bildet und parallel zum Reaktionsraum (10) zurückgeführt wird. In einer besonders bevorzugten Ausführungsform, wie sie beispielsweise der Fig. 5 entnommen werden kann, bilden der Reaktionsraum (10) und das Dampfrohr (25) der Vorrichtung daher im Wesentlichen eine U-Form aus, abgesehen von möglichen Zu- und Ableitungen und/oder Sensoren. In einem Aspekt der Erfindung kann der Wasserdampf, der über mindestens eine Auslassöffnung (25) aus dem Reaktionsraum (10) geleitet wurde, in einen externen Plattenwärmetauscher, welcher vorzugsweise zusätzlich mindestens ein Wärmerohr (Heatpipe) aufweist, geleitet werden.

Das im Dampfrohr (40) hergestellte Kondensat wird in einer Ausführungsform der Erfindung über eine Austrittsöffnung (35) aus der Vorrichtung hinausgeleitet. Die Austrittsöffnung (35) die mindesten eine Leitung, beispielsweise in Form eines Rohres, besonders bevorzugt eines hydraulischen Rohres aufweist, kann hierbei ein oder mehrere Verbindungselemente, wie beispielsweise Verschraubungen, Adapter, Mutter oder ähnliche Verbindungselemente aufweisen. Die Verbindungselemente können beispielsweise Schottverbindungen, Rohrdurchführungen, Hydraulikverschraubungen, Einschraubverschraubungen und/oder Doppelnippel, jedoch nicht beschränkt auf die vorherige Auflistung. Darüber hinaus ist auch vorzugsweise mindestens ein Dichtelement, wie ein Ventil und/oder eine Dichtung, vorgesehen.

Der Reaktionsraum (10) umfasst in einem weiteren Aspekt mindestens einen Temperatursensor, beispielsweise in Form eines Thermoelements (110) und/oder eines Thermometers, sodass eine präzise Temperaturmessung im Reaktionsraum (10) ermöglicht wird. In einer bevorzugten Ausführungsform handelt es sich bei dem mindestens einen Temperatursensor um mindestens ein Einschraubthermoelement, welches für einen Messbereich bis 1850 °C geeignet ist. Mithilfe des mindestens einen Temperatursensors soll eine permanente und möglichst präzise Überwachung der Reaktionstemperatur erfolgen.

In einer weiteren Ausführungsform ist ein Distanzrohr (70) vorgesehen. Das Distanzrohr (70) soll zur mechanischen Stabilität der Vorrichtung im vorderen Bereich des Reaktionsraumes (10) beitragen. Der vordere Bereich des Reaktionsraumes (10) soll dabei einen Bereich von der Einlassöffnung (15) bis 50 %, vorzugsweise bis 35 %, besonders bevorzugt bis 15 % der Gesamtlänge des Reaktionsraumes (10) umfassen. Darüber hinaus sollen mithilfe des Distanzrohrs (70) vorzugsweise zusätzlich die einzelnen Baugruppen miteinander verbunden werden, wie beispielsweise der vordere Bereich des Reaktionsraumes (10) mit dem vorderen Bereich der Austrittsöffnung (35), wobei der vordere Bereich der Austrittsöffnung (35) den Bereich umfasst in den das Dampfrohr (40) in die Austrittsöffnung (35) übergeht bis 50 % der Gesamtlänge der Austrittsöffnung (35), vorzugsweise bis 40 % der Gesamtlänge der Austrittsöffnung (35).

Die erfindungsgemäße Vorrichtung kann ferner in einem Aspekt ein oder mehrere Ventile umfassen, die den Druck innerhalb des Reaktionsraumes (10) und/oder des Dampfrohrs (40) regeln können. Bei den Ventilen kann es sich um jedes bekannte Ventil handeln, das geeignet für den hiesigen Einsatz ist. In einer bevorzugten Ausführungsform handelt es sich bei dem mindestens einen eingesetzten Ventil um ein Edelstahl-Magnetventile zur Druckregelung, welches besonders bevorzugt zur Druckregelung bis zu 1 bar geeignet ist. Das mindestens eine Druckventil kann in einem Aspekt als Sicherungssystem verwendet werden, dass bei entsprechenden Druckänderungen geschlossen oder geöffnet werden kann. Alternativ oder zusätzlich kann mindestens ein Drucksensor vorgesehen sein, welcher den Druck innerhalb des Reaktionsraumes (10) und/oder dem Dampfrohr (40) erfasst. Bei dem mindestens einen Drucksensor kann es sich um ein mittelbares, unmittelbares oder spezielle Druckmessgeräte handeln.

In einer weiteren Ausführung ist eine Kupferspule zur Resonanzanregung des Plasmas im Reaktionsraum (10) um den Außenmantel dieses vorgesehen. Diese Kupferspule kann sodann mit einer harmonischen Modulationsfrequenz (nach Global Scaling) zwischen 2 bis 12 KHz betrieben werden.

Die Vorrichtung dient zur Wärmeerzeugung durch die Reaktion eines Wasserstoff-Gasgemisches (H₂-Gasgemisch). Während dieses Prozesses besteht die Möglichkeit, dass sich das Gasgemisch unkontrolliert entzündet, wodurch es zu einem Rückbrand oder einer Explosion führen kann. Um dieses Risiko zu minimieren oder zu verhindern umfasst die die Vorrichtung zur Wärmeerzeugung in einer Ausführungsform mindestens ein Sicherheitssystem. Bei dem Sicherheitssystem handelt es sich insbesondere um eine passive Sicherheitsvorrichtung, die mechanisch aktiviert wird, wenn ein Rückbrand in der Vorrichtung erkannt wird. Die Hauptfunktion besteht darin, eine Flammenrückschlag-Sicherung zu gewährleisten, sodass das Feuer nicht in die Zuleitungen oder Gasquellen zurückschlagen kann. Das Sicherheitssystem umfasst hierfür vorzugsweise die Kombination aus präziser Sensortechnik, softwaregestützter Steuerung und automatisierten Ventilen, vorzugsweise Magnetventilen, die Betriebssicherheit gewährleistet. Die Magnetventile erlauben ferner in die in kritischen Situationen eine automatische Schließung oder Öffnung der entsprechenden Ventile. Das Sicherheitssystem ist in einem Aspekt in die Vorrichtung zur Wärmeerzeugung integriert. Ferner ist das System vorzugsweise dauerhaft aktiv, zumindest wenn die Vorrichtung zur Wärmeerzeugung Wärme produziert. In einem bevorzugten Aspekt der Erfindung arbeitet das Sicherheitssystem ohne elektrische oder elektronische Komponenten und wird rein mechanisch durch den Rückschlag des H₂-Gasgemisches aktiviert. Wenn eine Flammenrückzündung auftritt, blockiert das Sicherheitssystem die weitere Zufuhr von Wasserstoff, um eine Ausbreitung zu verhindern. Das Sicherheitssystem ist somit unabhängig von einer externen Energieversorgung und kann folglich zuverlässig und schnell bei einer Gefahrensituation reagieren.

Das Sicherheitssystem überwacht in einem Aspekt kontinuierlich den Arbeitsdruck innerhalb der Vorrichtung und regelt diesen im automatisierten Betrieb auf einen definierten Bereich. Der Arbeitsdruck-Bereich beträgt insbesondere zwischen 0,3 bar und 0,8 bar. Beim Erreichen oder Überschreiten der vordefinierten Grenzwerte des Arbeitsdruck-Bereichs, erfolgt durch eine Steuereinheit und eine vorzugsweise darin programmierte Steuerlogik eine sofortige Schließung der Ventile, wobei es sich vorzugsweise um Magnetventile handelt. Hierdurch wird jegliche Gefahr eines Rückschlags wirksam verhindert. In einer bevorzugten Ausführungsform erfolgt bei einem Druckabfall unter 0,3 bar oder einem Druckanstieg über 0,8 bar des Arbeitsdruck-Bereichs eine Schließung der Ventile. In einer weiteren Ausführungsform wird zeitgleich der Elektrolyseur außer Betrieb gesetzt, um die Zufuhr weiterer Gase in den Reaktionsraum (10) vollständig zu unterbinden. Diese automatische Abschaltfunktion minimiert potenzielle Gefährdungen und stellt sicher, dass in Störfällen keine brennbaren Gase in den Reaktionsraum (10) gelangen können.

In einem Aspekt der Erfindung kann bei der Verwendung von Magnetventilen an kritischen Zulauf- bzw. Abläufen auch auf eine Steuereinheit verzichtet werden, da diese auf bestimmte Temperatur- und Druckveränderungen reagieren können und eine Schließung bzw. Öffnung dieser bei bestimmten Temperaturen oder kritischen Druckpunkt automatisch durchführen können.

Das Sicherheitssystem zeichnet sich durch seine Fähigkeit zur Echtzeitüberwachung und -regulierung aus und gewährleistet durch die vollautomatische Prozesssteuerung ein hohes Maß an Betriebssicherheit und Anlagenschutz.

In einem weiteren Aspekt kann die erfindungsgemäße Vorrichtung ferner mindestens eine Steuereinheit umfassen. Bei der mindestens einen Steuereinheit kann es sich beispielsweise um eine Recheneinheit, wie beispielsweise einen Computer handeln. Die Steuereinheit umfasst in der Regel mindestens einen Speicher und mindestens einen Prozessor. Bei dem Speicher kann es sich auch um einen externen Speicher handeln. Der mindestens eine Prozessor führt vorzugsweise auf dem Speicher gespeicherte Anweisungen aus, die beispielsweise die Regelung der Ventile sowie den Zulauf bzw. Ablauf der Gase bzw. Gasgemische in die Vorrichtung steuern. In einem Aspekt kann vorgesehen sein, dass einige der durch den Computer gesteuerten Funktionen durch ein oder mehrere Computer durchgeführt werden, die über ein Netzwerk, wie beispielsweise das Internet und/oder über eine oder mehrere entsprechende Schnittstellen, wie Anwendungsprogramm- Schnittstellen (API) gesteuert werden, die sich an demselben geographischen Ort befinden wie die Vorrichtung oder auf mehrere geographische Orte verteilt sind. In diesem Zusammenhang umfasst die Steuereinheit ferner vorzugsweise eine Verbindungseinheit, die es ermöglicht eine Kommunikationsverbindung zu einem weiteren Gerät, Computer oder Ähnlichem herzustellen. Bei der Kommunikationsverbindung kann es sich bekanntermaßen, um eine Internetverbindung und/oder eine Funkverbindung handeln. Dem Fachmann ist jedoch geläufig, dass jede bekannte Kommunikationsverbindung verwendet werden kann. Mithilfe der Steuereinheit, die vorzugsweise mit den Sensoren der Vorrichtung, wie dem mindestens einen Temperatursensor und/oder dem mindestens einen Drucksensor gekoppelt ist, sowie besonders bevorzugt zusätzlich mit den Ventilen, Zuläufen und/oder Abläufen, kann eine vollständig automatisierte Wärmeerzeugung erreicht werden.

Die vorliegende Erfindung betrifft daher auch ein Verfahren zur Wärmeerzeugung, vorzugweise mit einer Vorrichtung, wie sie zuvor beschrieben wurde. Das Verfahren kann dabei zunächst die Herstellung eines H₂/O₂-Gemisches umfassen. Die Herstellung erfolgt hierbei vorzugsweise unter Verwendung eines Elektrolyseurs, d.h. einer Einheit, welche mithilfe eines elektrischen Stromes eine chemische Reaktion, nämlich die Elektrolyse von Wasser (H₂O) zu Wasserstoff (H₂) und Sauerstoff (O₂), durchführen kann. Als Elektrolyseur können im Stand der Technik bekannte Geräte verwendet werden, wie beispielsweise Dekarbonisierungsmodule, die zur Herstellung von H₂/O₂-Gemischen. Alternativ können auch andere Moleküle zur Herstellung eines H₂-Mischgases verwendet werden. In einer bevorzugten Ausführungsform wird jedoch ein H₂/O₂-Gemisch in der hiesigen Vorrichtung verwendet. Das hergestellte H₂/O₂-Gemisch oder das aus einer externen Quelle zugeführte H₂/O₂-Gemisch wird in einem ersten Schritt des erfindungsgemäßen Verfahrens mithilfe geeigneter Leitungen in den Reaktionsraum (10) geleitet.

Das erfindungsgemäße Verfahren umfasst folglich die Zufuhr eines H₂/O₂-Gemisches in den Reaktionsraum (10), wobei dies vorzugsweise bei einem Druck von 0,2 bar bis 0,8 bar erfolgt. Als besonders effizient hat sich jedoch eine Zufuhr bei 0,4 bar bis 0,6 bar gezeigt. Obwohl im Folgenden der Einfachheit halber das Verfahren in Bezug auf ein H₂/O₂-Gemisch beschrieben wird, ist dem Fachmann auf dem Gebiet geläufig, dass auch andere H₂-Mischgase Anwendung finden können, die beispielsweise, aus Erdgas, Biogas, Methanol oder Methan, jedoch nicht begrenzt auf die vorherige Auflistung gewonnen werden können. In einer besonders bevorzugten Ausführung soll jedoch eine Elektrolyse aus Wasser mit den folgenden Gasen, Wasserstoff und Sauerstoff angewendet werden, damit die Nutzung von fossilen Brennstoffen eliminiert und CO₂-Emissionen auf null reduziert werden.

Im folgenden Schritt des erfindungsgemäßen Verfahrens erfolgt eine thermische Reaktion, bei welcher der Wasserstoff (H₂) mithilfe eines elektronischen Impulses entzündet wird. Die daraus resultierende plasmatische Flamme erreicht Temperaturen von bis zu 1850 °C. In einem Aspekt der Erfindung ist vorgesehen, dass die ablaufende thermische Reaktion mithilfe Zuführung von heißem Wasserdampf aufrechterhalten wird. Bei dem Wasserdampf, der für das Aufrechterhalten der Reaktion verwendet wird, kann es sich um minimale Mengen handeln, da bereits geringe Mengen aufgrund des sich ausdehnenden Wasserdampfs und damit verbundenen Ausdehnungsgrades die Reaktion stabilisieren können. Der Wasserdampf kann beispielsweise durch eine geeignete Leitung dem Reaktionsraum (10) zugeführt werden. Alternativ oder zusätzlich kann auch Wasser, das zur Elektrolyse verwendet wurde oder aus dieser entstammt, in den Reaktionsraum (10) zur Aufrechterhaltung der thermischen Reaktion des Wasserstoffs verwendet werden.

In einer Ausführungsform werden die in der thermischen Reaktion entstehenden Gase, in einem nächsten Schritt abgekühlt. Die Kühlung erfolgt vorzugsweise mithilfe einer Kupferspirale, an welcher die zuvor genannten Gase, vorzugsweise zu Wasser, kondensieren. Das kondensierte Wasser wird in einem Aspekt der Erfindung in den Elektrolytbehälter zurückgeleitet und steht somit der Wiederverwendung zur Verfügung.

In einem bevorzugten Aspekt wird bei einem voreingestellten Druck und/oder einer voreingestellten Temperatur das Verfahren beendet und die Erzeugung von Wasserstoff und/oder seine Plasmalyse abgeschaltet. Die Abschaltung erfolgt vorzugsweise bei einem Druck von 0,20 bar bis 0,40 bar, besonders bevorzugt hat sich jedoch eine Abschaltung bei 0,30 bar bis 0,35 bar erwiesen.

Ferner kann vorgesehen sein, dass in einem Schritt des Verfahrens oder parallel zu den ablaufenden Schritten die Temperatur im Reaktionsraum (10) und gegebenenfalls auch anderen Einheiten der Vorrichtung gemessen wird. Die Messung kann hierbei dauerhaft erfolgen oder in bestimmten Intervallen. Gleiches gilt für die Messung des Druckes, wobei aus Sicherheitsgründen bei der Messung des Druckes vorzugsweise eine kontinuierliche Beobachtung und Messung sinnvoll ist, damit die Vorrichtung keinen Schaden nimmt.

Die vorliegende Erfindung betrifft ferner weiterhin ein Computerprogrammprodukt mit mindestens einem Speichermedium, auf dem ein Computerprogramm gespeichert ist, dass zur (zumindest teilweisen) Durchführung des zuvor beschriebenen Verfahrens eingerichtet ist. Der Begriff Computerprogrammprodukt umfasst hierbei ein auf einem Träger gespeichertes Computerprogramm, wie beispielsweise RAM, ROM, CD, Geräte und ähnliche Vorrichtungen; ein Embedded System als umfassendes System mit einem Computerprogramm, wie beispielsweise ein elektronisches Gerät mit einem Computerprogramm; ein Netzwerk von computerimplementierten Computerprogrammen, wie beispielsweise Serversysteme, Client-Systeme, Cloud Computing Systeme und ähnliche; und/oder Computer auf denen ein Computerprogramm geladen ist, abläuft, gespeichert ist, ausgeführt wird. Das Speichermedium kann, wie zuvor beschrieben geographisch entfernt von der Vorrichtung und dem Computerprogrammprodukt angeordnet sein. In einer bevorzugten Ausführungsform ist das Computerprogramm(-produkt) direkt in den internen Speicher eines digitalen Computers geladen und umfasst Softwarecodeabschnitte, die Befehle umfassen, die bei der Ausführung des Programms durch die hiesige Vorrichtung oder mindestens eine Steuereinheit der Vorrichtung, diese dazu veranlassen, das zuvor beschriebene Verfahren auszuführen. Wie zuvor beschrieben, kann vorgesehen sein, dass die mindestens eine Steuereinheit der Vorrichtung eine Kopplung mit den Sensoren der Vorrichtung, wie dem mindestens einen Temperatursensor und/oder dem mindestens einen Drucksensor sowie besonders bevorzugt zusätzlich den Ventilen, Zuläufen und/oder Abläufen, aufweist, um eine vollständig automatisierte Wärmeerzeugung zu erreichen. Hierzu können bei einigen Bauteilen, wie beispielsweise den Ventilen, Zuläufen und/oder Abläufen elektrisch ansteuerbaren Aktuator vorgesehen sein, die mit einem entsprechenden Computerprogrammprodukt verbunden sind. Darüber hinaus kann in einem Aspekt der vorliegenden Erfindung vorgesehen sein, dass bestimmte Parameter, wie der Einleitdruck, der Druck im Reaktionsraum (10), die Temperatur im Reaktionsraum (10) und/oder andere relevante Parameter für das Verfahren sowie optional Messintervalle und/oder Parameter für ein Notaus auf dem mindestens einen Speicher des Computerprogrammprodukts hinterlegt sind, sodass eine vollständig automatisierte Wärmeerzeugung erreicht werden. In einer weiteren Ausführungsform kann das Verfahren und/oder das Computerprogramm mit verschiedenen Computersystemkonfigurationen ausgeführt werden. Diese Computersystemkonfigurationen umfassen sind jedoch nicht beschränkt auf Cloud-Computing, Client-Server-Modelle, Grid-Computing, Peer-to-Peer, Handheld-Geräte, Multiprozessor- Systeme, mikroprozessorbasierte Systeme, programmierbare Unterhaltungselektronik, Minicomputer und/oder Großrechner. Zusätzlich oder alternativ können einige der Ausführungsformen in einer verteilten Computerumgebung ausgeübt werden, in der die Aufgaben durch Fernbearbeitungsgeräte durchgeführt werden, die über ein Kommunikationsnetz verbunden sind. In einer verteilten Computerumgebung können Programmkomponenten in sowohl lokalen und als auch entfernten Computer und/ oder Speichergeräten lokalisiert sein. Zusätzlich oder alternativ können einige der Ausführungsformen in Form eines Dienstes wie Infrastructure-as-a-Service (laaS), Platform-as-a-Service (PaaS), Software-as-a-Service (SaaS) und/oder Network-as-a-Service (NaaS) ausgeübt werden.

Mithilfe der hiesigen Vorrichtung, des dazugehörigen Verfahrens und des Computerprogrammprodukts wird eine einzigartige Kombination aus thermischer Effizienz und Sicherheit erreicht, die fossile Brennstoffe eliminiert und somit CO₂-Emissionen reduziert. Darüber hinaus kann das gebildete Wasser in einem geschlossenen System recycelt werden. Mithilfe der relativ kompakten Bauweise, lässt sich die hiesige Vorrichtung und das dazugehörige Verfahren auch in stationären Geräten und privaten Haushalten einsetzen. Natürlich ist die Verwendung n Großanlagen auch geeignet.

Im Gegensatz zu bekannten Brennern, beispielsweise mit offener Flammenverbrennung oder einfachen Reaktionskammern, ermöglicht die erfindungsgemäße Geometrie und Zündtechnik einen stabilen Übergang von einer initialen Düsenflamme zu einem pulsierenden plasmatischen Verbrennungszustand, inklusive Thermolyse, im gesamten Reaktionsraum. Aufgrund dessen wird eine hochgradig effiziente Thermolyse und Rekombination des Gases erreicht, die zu einer intensiven Erwärmung eines inneren Wärmespeicherrohrs und/oder der Erzeugung von hochenergetischem Wasserdampf führt. Beides kann extern weiter genutzt werden.

Diese und andere Ausführungsformen der vorliegenden Erfindung werden in der Beschreibung und den Beispielen offenbart und sind durch diese umfasst. Weitere Literatur über bekannte Materialien, Verfahren und Anwendungen die in Übereinstimmung mit der vorliegenden Erfindung verwendet werden können, können aus öffentlichen Bibliotheken und Datenbanken, beispielsweise unter Verwendung elektronischer Geräte aufgerufen werden. Ein vollständigeres Verständnis der Erfindung kann durch Bezugnahme auf die Figuren erhalten werden, die zum Zweck der Illustration bereitgestellt wurden und den Umfang der Erfindung nicht beschränken sollen.

### Beispiele

### Beispiel 1: Bevorzugte Ausführungsform einer Vorrichtung zur Wärmeerzeugung geeignet für den Einbau in stationären Heizungs- und/oder Warmwassergeräten

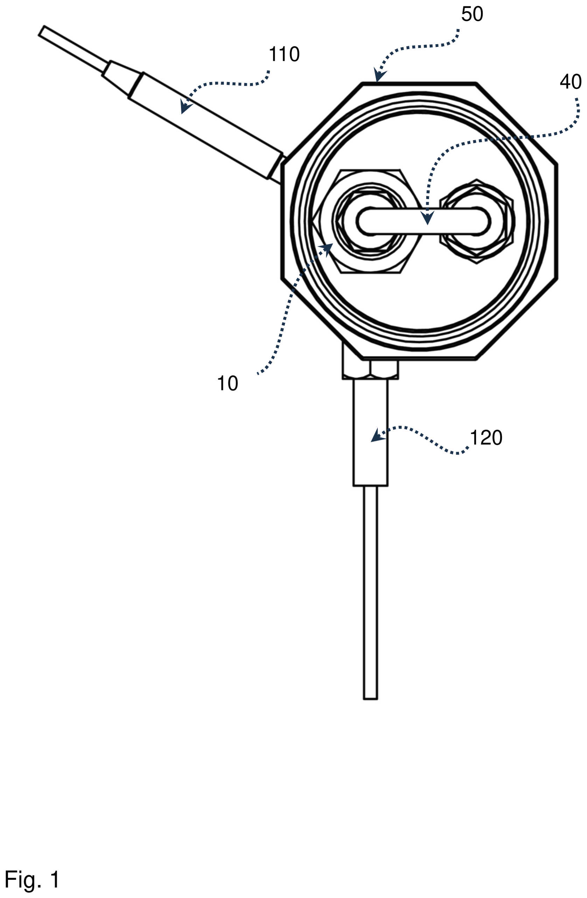

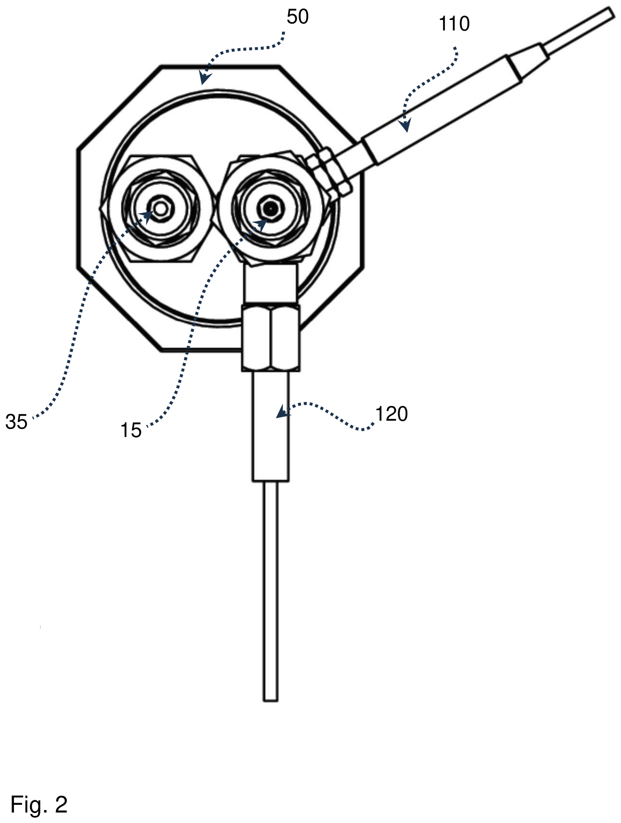

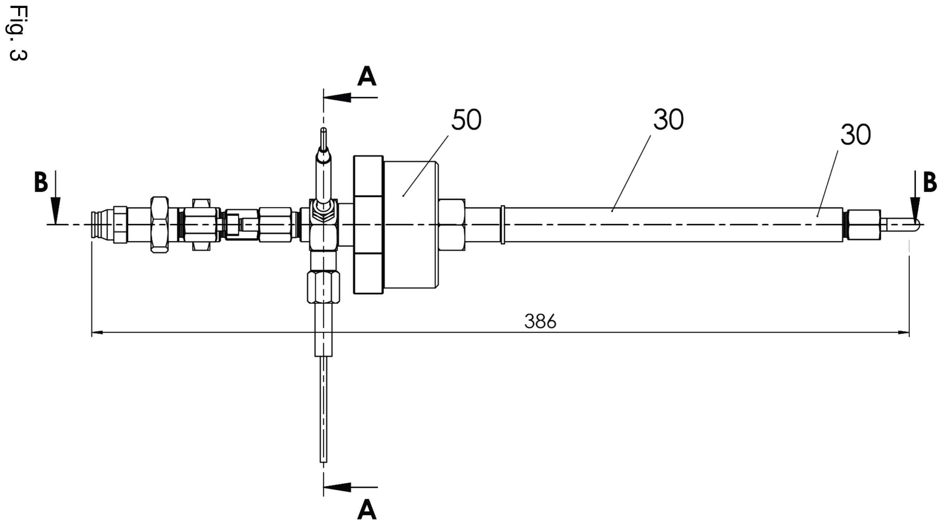

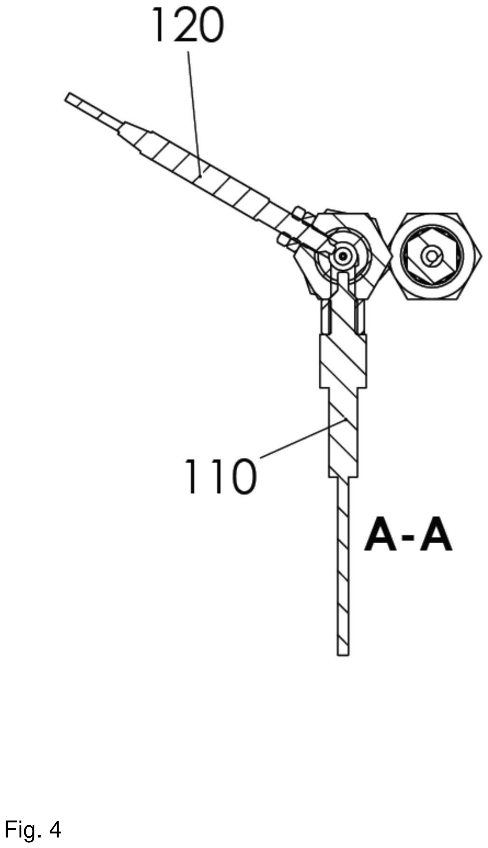

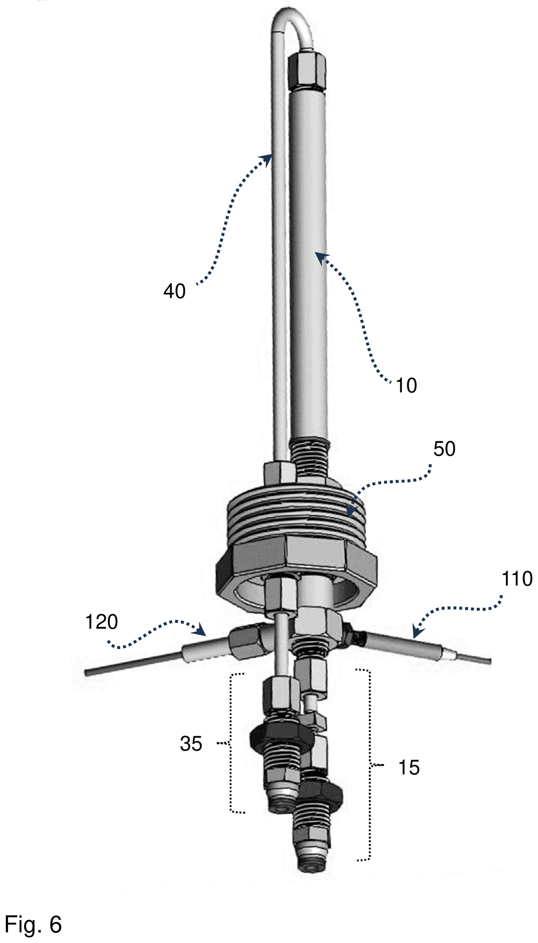

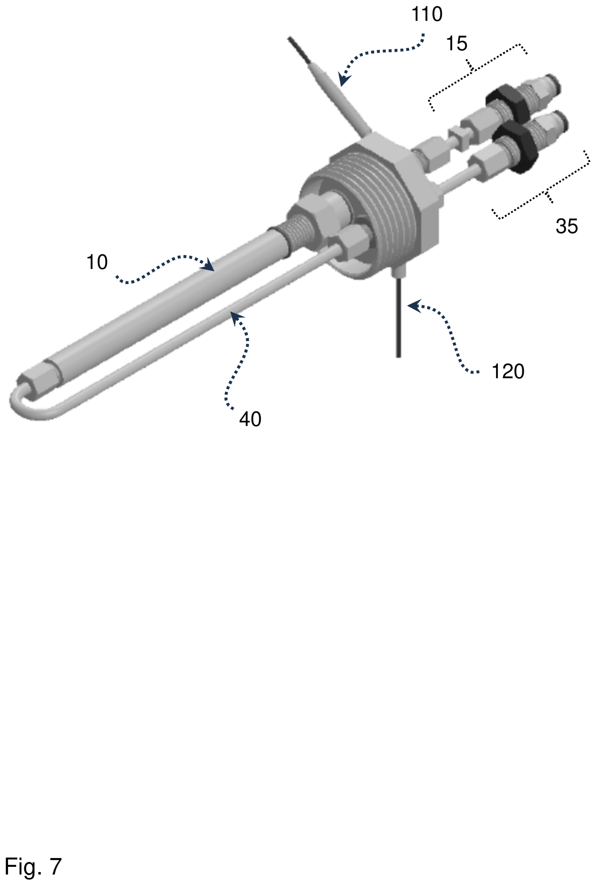

In den Fig. 1 bis 7 ist eine bevorzugte Ausführungsform der erfindungsgemäßen Vorrichtung zur Wärmeerzeugung mit einem elektrischen Impulszünder (120) und einem Thermoelement (110) dargestellt.

Die Vorrichtung umfasst eine Einlassöffnung (15), welche ein Ventil (90), einen Adapter (100), eine Düse (20) und Verbindungselemente umfasst. Durch die Einlassöffnung (15) wird ein Gasgemisch umfassend Wasserstoff und Sauerstoff in einen Reaktionsraum (10) geleitet. Im Reaktionsraum (10) wird die Redoxreaktion des Wasserstoffs mit dem Sauerstoff durch einen elektrischen Impulszünder (120) eingeleitet. Um die stark exotherme Reaktion kontrollieren zu können, ist ferner ein Thermoelement (110) innerhalb des Reaktionsraumes (10) angeordnet, welches die Temperatur in diesem messen kann. Das in der Redoxreaktion gebildete Wasser, in Form, von Wasserdampf, wird über eine Auslassöffnung (25) aus dem Reaktionsraum (10) in ein Dampfrohr (40) geleitet. Wie den Fig. 1, 5, 6 und 7 zu entnehmen ist, beschreibt das Dampfrohr (40) eine Kurve und verläuft parallel zum Reaktionsraum (10) zurück. Innerhalb des Dampfrohres (40) befindet sich vorzugsweise eine Kupferspirale (nicht dargestellt), an welcher der Wasserdampf abkühlt und zu flüssigem Wasser kondensiert. Das hierbei entstandene Wasser kann durch eine Verbindungsleitung (nicht dargestellt) in den Reaktionsraum (10) geleitet werden, um die Redoxreaktion innerhalb dieses aufrecht und stabil zu halten. Das nicht verwendete Wasser kann im Folgenden durch eine Austrittsöffnung (35) beispielsweise in einen Elektrolyseur zurückgeleitet und zur Herstellung von Wasserstoff wiederverwendet werden. Aus Sicherheitsgründen weist die Austrittsöffnung (35) neben einem Ventil (90) und einem Adapter (100) am Ausgang, ein Hydraulikrohr (80), Dichtungen (130) und Verbindungselemente (60) auf, bei einem Überdruck eine kontrollierte Entnahme dieses ermöglichen sollen.

### Beispiel 2: Bevorzugte Ausführungsform einer erfindungsgemäßen Vorrichtung

Eine bevorzugte Ausführungsform der erfindungsgemäßen Vorrichtung umfasst vorzugsweise einen zylindrischen Reaktionsraum, dessen Außenwand aus einem hitzebeständigen Material, wie beispielsweise Edelstahl, ausgebildet ist.

Darüber hinaus umfasst die erfindungsgemäße Vorrichtung in einem Aspekt ferner ein koaxial angeordnetes Inlay-Rohr, auch Innenrohr, welches als Wärmeausdehnungs-/Wärmespeicherrohr dient. Insbesondere kann das Inlay-Rohr verwendet werden, um thermische Resonanzen zu fördern. Darüber hinaus kann durch katalytische Verbrennung von platinierten Sand die Effizient erhöht der Vorrichtung bei der Wärmeerzeugung erhöht werden. Das Inlay-Rohr kann beispielsweise aus einem V2A-Edelstahl ausgebildet sein. In einer besonders bevorzugten Ausführung kann vorgesehen sein, dass das Inlay-Rohr zur Wärmespeicherung einen kleineren Durchmesser aufweist als der Reaktionsraum (10), vorzugsweise 1 % bis 40 % kleiner als der Reaktionsraum. Die Länge des Inlay-Rohr ist abhängig von der Länge des Reaktionsraumes und beträgt vorzugsweise 30 mm bis 220 mm, besonders bevorzugt 40 mm bis 160 mm. Die Wandstärke des Inlay-Rohres beträgt zwischen 2 mm und 5 mm, besonders bevorzugt 3 mm. Optional kann darüber hinaus vorgesehen sein, dass das Inlay-Rohr mit einem thermisch leitfähigen Material, wie beispielsweise Sand, vorzugsweise Siliziumsand oder Siliziumstein, gefüllt ist, um Wärme zu speichern und eine resonante Schwingung zu fördern. Das leitfähige Material, wie beispielsweise der Silizium-Sand, kann in einer Ausführungsform platiniert sein. Durch das Platinieren kann eine sog. "Katalytische Verbrennungs"-Option gefördert werden, die den Verbrennungsprozess zusätzlich unterstützt. In einem solchen Fall, weist das Inlay-Rohr mindestens eine Bohrung auf, die einen Gaseintritt ermöglicht.

In einem Aspekt kann durch die die Sandpressung bzw. den Druck im Zwischenraum der beiden Rohre, d.h. des Reaktionsraumes (10) und des Innenrohres, piezoelektrisch Spannung erzeugt werden, die man für den Prozess der Wärmeerzeugung in der hiesigen Vorrichtung genutzt werden kann.

Die Vorrichtung weist ferner in einem Aspekt an einer Einlassöffnung (15) am Reaktionsraum (10) eine Düse (20), vorzugsweise mit einem Durchmesser von 0,5 mm bis 5 mm auf, die für eine kontrollierte Einleitung des Gasgemisches, vorzugsweise H₂/O₂-Gemisches, besonders bevorzugt eines getrockneten H₂/O₂-Gemisches, bei niedrigem Überdruck, beispielsweise 0,1-0,5 bar, vorzugsweise 0,2 bar, in den Reaktionsraum (10) erreichen soll. In einer besonders bevorzugten Ausführungsform kann vorgesehen sein, dass mindestens zwei Input-Düsen (20) an dem Reaktionsraum (10) angeordnet sind, wobei jeweils eine an jeder Stirnseite des Reaktionsraumes (10) angeordnet ist. Hierbei sind die jeweiligen Düsen (20) vorzugsweise mit einem jeweiligem Zündsystem ausgestattet, wobei jeweils ein konischer Reflektor jeweils hinter einer jeden Düsen (20) angeordnet ist, sodass das innere Plasma des Reaktionsraumes (10) eine echte stehende Welle formieren kann. Der Wasserdampf-Ausgang, d.h. die Auslassöffnung (25), befindet sich besonders bevorzugt mittig an der Unterseite des Reaktionsraumes (10).

In einem weiteren bevorzugten Aspekt weist das Inlay-Rohr einen konischen Reflektor (Kegel) an seinem distalen Ende auf. Die Spitze des Reflektors ist hierbei vorzugsweise in Richtung der Düse (20) gerichtet ist, um die Flamme gezielt in den gesamten Reaktionsraum (10) zu umzulenken.

Darüber hinaus können mindestens zwei (modifizierte) Zündkerzen umfasst sein, bei denen es sich vorzugsweis um Kathodenbögen handelt die in einem bestimmten Abstand zueinander angeordnet sind. Der Elektrodenabstand der Kathodenbögen beträgt vorzugsweise 8 mm bis 12 mm, besonders bevorzugt 10 mm. Diese Zündkerzen ermöglichen eine hochenergetische Impulszündung, beispielsweise mit 10-20 kV, vorzugsweise 15 kV und gewährleisten vorzugsweise einen stabilen Funkensprung.

Der erzeugte Wasserdampf wird vorzugsweise über mindestens eine Auslassöffnung (25) aus dem Reaktionsraum (10) geleitet. Im Folgenden kann der Wasserdampf der in einen externen Plattenwärmetauscher, welcher vorzugsweise zusätzlich mindesten ein Wärmerohr (Heatpipe) aufweist, geleitet werden.

In einer weiteren Ausführung ist eine Kupferspule zur Resonanzanregung des Plasmas im Reaktionsraum (10) um den Außenmantel dieses angebracht. Diese Kupferspule kann sodann mit einer harmonischen Modulationsfrequenz (nach Global Scaling) zwischen 2 bis 12 KHz betrieben werden.

Insbesondere durch die Kombination aus konischem Reflektor, engem Ringspalt zwischen Inlay-Rohr und Außenwand sowie Impulszündung wird ein Übergang von einer initialen Flamme zu einem stabilen, pulsierenden plasmischen Verbrennungszustand mit resonanter thermischer Dissoziation (Hydrolyse) geschaffen, bei dem eine Rekombination des Gases im gesamten Reaktionsraum ermöglicht wird. Darüber hinaus kann eine intensive Erwärmung des verwendeten Inlay-Rohrs auf >1200 °C und eine effiziente Erzeugung von hochenergetischem Wasserdampf erreicht werden.

### Beispiel 3: Bevorzugte Ausführungsform eines erfindungsgemäßen Verfahrens

Im Folgenden ist eine bevorzugte Ausführungsform eines Verfahrens zur Wärmeerzeugung beschrieben.

### Schritt 1 - Gasbereitstellung:

Vorzugsweise in einem Membran-freien Elektrolyseur wird ein stöchiometrisches Gasgemisch, insbesondere H₂/O₂-Gemisch (2 H₂ + O₂) erzeugt. Das Gasgemisch wird vorzugsweise getrocknet und auf einen definierten Druck, beispielsweise 0,2 bar für eine 1-mm-Düse, gebracht. In einer bevorzugten Ausführungsform wird der Überdruck des Gasgemisches elektronisch durch eine elektronische Steuerung bzw. Regelung gesteuert.

### Schritt 2 - Initialzündung:

Das Gasgemisch wird vorzugsweise nach Start einer Impulszündung, vorzugsweise 15 kV mittels mindestens einer modifizierten Zündkerze, in den Reaktionsraum (10) eingeleitet. An der Düse (20) der Einlassöffnung (15) entsteht durch die Initialzündung eine initiale Flamme, welche vorzugsweise Temperaturen über 2200 °C erreicht. In einem bevorzugten Aspekt wird aufgrund der Geometrie, insbesondere des konisch geformten Reflektors, die erzeugte Flamme gezielt bis zur Spitze des Kegels des konischen Reflektors verlängert und füllt den gesamten Reaktionsraum aus. In einer besonders bevorzugten Ausführungsform erwärmt das Inlay-Rohr auf über 1200 °C, vorzugsweise sich innerhalb weniger Sekunden, und beginnt an zu glühen. Die optionale Sand-Füllung, vorzugsweise Silizium, welche in einem Aspekt ferner platiniert sein kann, unterstützt darüber hinaus die Wärmespeicherung und -verteilung.

### Schritt 3 - Übergang zum pulsierenden plasmischen Zustand mit Thermolyse:

Bei einer kontinuierlichen Zufuhr des Gasgemisches, vorzugsweise H₂/O₂-Gemisches, und vorzugsweise der spezifischen Reaktorgeometrie, insbesondere dem engeren Ringspalt zwischen Inlay-Rohr und Außenwand sowie dem konischen Reflektor, geht die initiale Flamme in einen geschlossenen, pulsierenden plasmischen Verbrennungszustand über. Dies führt zu einer resonanten thermischen Dissoziation mit hochfrequenter Aufspaltung, der sogenannten Thermolyse, und sofortiger Rekombination der Gasmoleküle im gesamten Reaktionsraum (10). Die Verbrennung wird in einer Ausführungsform dadurch stabilisiert und intensiviert, ohne dass die offene Düsenflamme weiter dominant ist.

### Schritt 4 - Wärmeübertragung:

Der in Schritt 3 entstehende hochenergetische Wasserdampf, sogenanntes rekombiniertes Wasser, wird durch eine Auslassöffnung (25) abgeführt und in ein Dampfrohr (40), wie beispielsweise einen Plattenwärmetauscher eingeleitet, wo die Wärme effizient genutzt wird, beispielsweise für Heizzwecke.

### Bezugszeichenliste

- 10: Reaktionsraum
- 15: Einlassöffnung
- 20: Düse
- 25: Auslassöffnung
- 30: Reaktionsrohraufsatz
- 35: Austrittsöffnung
- 40: Dampfrohr
- 50: Verbindungselement
- 60: Verbindungselement
- 70: Distanzrohr
- 80: Hydraulisches Rohr
- 90: Ventil
- 100: Adapter
- 110: Thermoelement
- 120: Impulszünder
- 130: Dichtung
- 140: Dichtung
- 150: Verbindung

## Patentansprüche

1. Vorrichtung zur Wärmeerzeugung umfassend mindestens eine Einlassöffnung (15) durch welche ein Wasserstoff (H₂)-Gasgemisch in mindestens einen Reaktionsraum (10) geleitet wird, wobei der Reaktionsraum (10) in Verbindung mit einem Impulszünder (120) steht, welcher eine Initialzündung des Gasgemisches im Reaktionsraumes (10) erzeugt, der dabei entstehende Wasserdampf wird über mindestens eine Auslassöffnung (25) aus dem Reaktionsraum (10) in ein Dampfrohr (40) geführt, in dem der Wasserdampf kondensiert, wobei das Dampfrohr (25) derart ausgebildet ist, dass es eine Kurve bildet und parallel zum Reaktionsraum (10) zurückgeführt wird, wodurch das darin gebildete Wasser zur Aufrechterhaltung der Reaktion im Reaktionsraum (10) und/oder zur Wiederverwendung in einem Elektrolyseprozess verwendet werden kann, darüber hinaus ist mindestens ein Temperatursensor im Reaktionsraum (10) angeordnet, der die Temperatur innerhalb der Reaktionsraumes (10) messen kann.

2. Vorrichtung nach Anspruch 1, wobei die mindestens eine Einlassöffnung (15) als ein Düsensystem ausgebildet ist, welches eine kontrollierte Einspeisung des Wasserstoff (H₂)-Gasgemisch ermöglicht, wobei das Düsensystem vorzugsweise eine Düse (20) mit einer Präzisionsöffnung umfasst, die einen Durchmesser von 0,5 mm bis 5 mm, besonders bevorzugt von 2 mm aufweist.

3. Vorrichtung nach Anspruch 1 oder 2, wobei innerhalb des Dampfrohrs (25), dem Dampfrohr (25) nachgeschaltet, oder dem Dampfrohr (25) vorgeschaltet eine Kühlung angeordnet ist, an welche die in der thermischen Reaktion entstehenden Gase abkühlen kann, wobei es sich bei der Kühlung vorzugsweise um eine Kupferspirale handelt.

4. Vorrichtung nach einem der Ansprüche 1 bis 3, wobei das im Dampfrohr (40) hergestellte Kondensat über eine Austrittsöffnung (35) aus der Vorrichtung hinausgeleitet wird, wobei die Austrittsöffnung (35) vorzugsweise mindestens ein Ventil (90) zur Druckregulierung aufweist.

5. Vorrichtung nach einem der Ansprüche 1 bis 4, wobei der mindestens eine Temperatursensor ein Thermoelement (110) und/oder ein Thermometer umfasst, vorzugsweise wobei es sich um ein Einschraubthermoelement für einen Messbereich bis 1850 °C handelt.

6. Vorrichtung nach einem der Ansprüche 1 bis 5, wobei
a) die Komponenten der Vorrichtung aus einem Edelstahl, vorzugsweise einem V2A-Edelstahl, besonders bevorzugt aus einem V4A-Edelstahl ausgebildet sind;
b) es sich bei dem und Wasserstoff (H2)-Gasgemisch um Sauerstoff (O2) und Wasserstoff (H2) handelt;
c) das Verbindungselement (90) an mindestens einen Adapter (100) angrenzend angeordnet ist, der der Anpassung zwischen den verschiedenen Komponenten dient;
d) das Gas über eine Leitung geleitet wird, die über ein Verbindungselement (90), bei dem es sich vorzugsweise um einen Doppelnippel handelt, mit der Vorrichtung zur Wärmeerzeugung gekoppelt ist; und/oder
e) mindestens ein Distanzrohr (70) zwischen dem Reaktionsraum (10) und dem zurückgeführten Dampfrohr (40) angeordnet ist, dass zur mechanischen Stabilität der Vorrichtung im vorderen Bereich des Reaktionsraumes (10) beiträgt.

7. Vorrichtung nach einem der Ansprüche 1 bis 6, wobei die Vorrichtung ein oder mehrere Ventile umfasst, die den Druck innerhalb des Reaktionsraumes (10) und/oder des Dampfrohrs (40) regeln, wobei es sich vorzugsweise um mindestens ein Edelstahl-Magnetventil zur Druckregelung handelt.

8. Vorrichtung nach einem der Ansprüche 1 bis 7, wobei die Vorrichtung
a) mindestens eine Steuereinheit und/oder
b) mindestens ein Sicherheitssystem
umfasst.

9. Vorrichtung nach einem der Ansprüche 1 bis 8, wobei der Vorrichtung mindestens ein Elektrolyseur zur Herstellung von Sauerstoff und Wasserstoff aus Wasser, vorgeschaltet ist.

10. Verfahren zur Wärmeerzeugung mit einer Vorrichtung nach einem der Ansprüche 1 bis 9, umfassend die folgenden Schritte:
a) Einleitung eines H₂/O₂-Gemisches in einen Reaktionsraum (10) bei einem Druck von 0,2 bar bis 0,8 bar;
b) Initiieren einer Redoxreaktion innerhalb des Reaktionsraumes (10) durch einen elektronischen Impuls;
c) Ableiten des entstehenden Wasserdampfes aus dem Reaktionsraum (10) in ein Dampfrohr (40), in dem dieses abgekühlt wird; und
d) Rückführung des entstehenden Wassers.

11. Verfahren nach Anspruch 10, wobei die Redoxreaktion innerhalb des Reaktionsraumes (10) durch Zuführung von Wasser aufrechterhalten erhalten wird.

12. Verfahren nach Anspruch 10 oder 11, wobei in einem Schritt des Verfahrens oder parallel zu den ablaufenden Schritten die Temperatur im Reaktionsraum (10) gemessen wird, wobei vorzugsweise die Messung kontinuierlich erfolgt.

13. Verfahren nach einem der Ansprüche 10 bis 12; wobei die Redoxreaktion innerhalb des Reaktionsraumes (10) bei einem voreingestellten Druck und/oder einer voreingestellten Temperatur beendet wird, indem kein weiterer H₂/O₂-Gasgemisch in diesen eingeführt wird, wobei vorzugsweise eine Abschaltung bei einem Druck von 0,20 bar bis 0,40 bar, besonders bevorzugt bei einem Druck von 0,30 bar bis 0,35 bar erfolgt.

14. Verfahren nach einem der Ansprüche 10 bis 13, wobei in einem vorgeschalteten Schritt eine Herstellung eines H₂/O₂-Gemisches erfolgt.

15. Computerprogramm zur Durchführung mindestens eines Schrittes des Verfahrens nach einem der Ansprüche 10 bis 14.
